# EUROPÄISCHE PATENTSCHRIFT

(11) **EP 3 372 716 B1**
(45) Veröffentlichungstag und Bekanntmachung des Hinweises auf die Patenterteilung: **04.09.2019**
(21) Anmeldenummer: 17160090.1
(22) Anmeldetag: 09.03.2017
(51) Int. Cl.: D04H 1/46, D04H 18/02

(54) **NADELMASCHINE**
NEEDLING MACHINE
AIGUILLETEUSE

(43) Veröffentlichungstag der Anmeldung: 12.09.2018
(73) Patentinhaber: Oskar Dilo Maschinenfabrik KG, 69412 Eberbach (DE)
(72) Erfinder: Dilo, Johann Philipp, 69412 Eberbach (DE)
(74) Vertreter: Wächter, Jochen

(56) Entgegenhaltungen:
- EP-A2- 0 892 102
- WO-A1-2007/134731
- GB-A- 2 355 020

## Beschreibung

Die Erfindung betrifft ein Verfahren zum Vernadeln einer Vliesbahn, bei der mindestens eine Welle einer Haupt- und/oder Nebenantriebseinrichtung zyklisch um einen vorbestimmten Drehwinkel hin- und herbewegt wird.

Nadelmaschinen sind dem Fachmann allgemein bekannt und beispielsweise in Lünenschloß und Albrecht: "Vliesstoffe", Georg-Thieme-Verlag Stuttgart, 1982, Seiten 122-129 beschrieben.

Üblicherweise wird bei Nadelmaschinen ein Vlies am Einlauf der Nadelmaschine zugeführt und in einer Förderrichtung der Vliesbahn zu einer Nadelzone gefördert. Im Bereich der Nadelzone ist mindestens ein Nadelbalken mit einem daran befestigten Nadelbrett angeordnet, welches mit Nadeln zum Verfestigen des Vlieses bestückt ist. In diesem Bereich wird das zu vernadelnde Vlies üblicherweise zwischen einer Niederhalterplatte und einer Stichplatte geführt. Die Nadeln verdichten das Vlies, indem sie in den Vliesstoff in einer Einstichrichtung mit hoher Frequenz hineingestochen und wieder herausgezogen werden. Dabei treten die Nadeln durch Ausnehmungen in der Niederhalterplatte sowie der Stichplatte hindurch. Das entstehende Produkt ist ein verfestigtes Vlies. Dem Fachmann sind die unterschiedlichsten Formen von Nadelmaschinen bekannt, darunter auch Doppelnadelmaschinen, bei denen von oben und von unten mittels zweier Nadelbalken genadelt wird, oder Nadelmaschinen, bei denen der Nadelbalken während des Verfestigungsvorgangs in Förderrichtung der Vliesbahn mit der Vliesbahn mitbewegt wird.

Um die an dem Nadelbalken angeordneten Nadeln in die Vliesbahn hineinzustechen und wieder herauszuziehen, umfassen Nadelmaschinen eine Antriebseinrichtung, die den Hub des Nadelbalkens in Einstichrichtung bewirkt. Solche Antriebseinrichtungen umfassen beispielsweise zwei Hauptwellen, auf denen jeweils ein Hauptpleuel exzentrisch gelagert ist, sodass eine Drehbewegung der Hauptwelle mittels des Hauptpleuels in eine Hubbewegung des Nadelbalkens in Einstichrichtung umgewandelt wird. Die Hauptwellen können durch eine Stirnradstufe gekoppelt sein und drehen bevorzugt in entgegengesetzte Drehrichtungen. Dadurch können Kräfte quer zur Einstichrichtung, die durch die exzentrische Bewegung der Hauptpleuel entstehen, neutralisiert werden. Aufgrund der Kopplung der beiden Hauptwellen mittels einer Getriebestufe ist es ausreichend, eine der Hauptwellen durch einen Antrieb umlaufend anzutreiben.

Nadelmaschinen, bei denen der Nadelbalken während des Verfestigungsvorgangs in Förderrichtung der Vliesbahn mitbewegt werden soll, umfassen in der Regel zudem einen Nebenantrieb. Dieser Nebenantrieb weist mindestens eine Nebenwelle auf, auf der ein Nebenpleuel exzentrisch gelagert ist. Der Nebenpleuel erstreckt sich im Wesentlichen parallel zur Förderrichtung der Vliesbahn und ist mit dem Nadelbalken gelenkig verbunden. Durch die exzentrische Lagerung des Nebenpleuels auf der Nebenwelle wird eine Drehbewegung der Nebenwelle mittels des Nebenpleuels in eine Hubbewegung des Nadelbalkens in Förderrichtung der Vliesbahn umgewandelt. Auch die Nebenwelle wird herkömmlicherweise von einem Antrieb umlaufend angetrieben. Durch die Überlagerung der Hubbewegung des Nadelbalkens in Einstichrichtung mit der Hubbewegung des Nadelbalkens in Förderrichtung der Vliesbahn wird der Nadelbalken im Wesentlichen auf einer elliptischen Bahn bewegt. Derartige Nadelmaschinen sind z.B. aus EP 0 892 102 A bekannt.

Es ist wünschenswert, sowohl den Hub des Nadelbalkens in Einstichrichtung als auch den Hub des Nadelbalkens in Förderrichtung der Vliesbahn an die im Einzelfall vorliegenden Anforderungen, z.B. Transportgeschwindigkeit, Dicke der Vliesbahn, Material der Vliesbahn, Materialdichte der Vliesbahn anpassen zu können.

Der vorliegenden Erfindung liegt die Aufgabe zugrunde, ein Verfahren zum Vernadeln einer Vliesbahn bereitzustellen, bei der der Hub des Nadelbalkens in Einstichrichtung und/oder der Hub des Nadelbalkens in Förderrichtung der Vliesbahn bei möglichst einfacher mechanischer und kinematischer Gestaltung der Nadelmaschine verstellbar ist.

Diese Aufgabe wird durch die Merkmale des Anspruchs 1 bzw. des Anspruchs 11 gelöst.

Erfindungsgemäß wird eine Nadelmaschine zum Vernadeln einer Vliesbahn vorgesehen. Die Nadelmaschine umfasst eine Nadelbalkenanordnung, die mindestens einen Nadelbalken umfasst, und eine Antriebseinrichtung zum Hin- und Herbewegen der Nadelbalkenanordnung in einer Einstichrichtung. Die Antriebseinrichtung umfasst einen ersten Antrieb und eine erste Hauptwelle, wobei an der ersten Hauptwelle ein erster Hauptpleuel exzentrisch gelagert ist, der die erste Hauptwelle mit der Nadelbalkenanordnung gelenkig verbindet. Der erste Antrieb ist derart angesteuert, dass er die erste Hauptwelle zyklisch um einen vorbestimmten ersten Drehwinkel hin- und herbewegt. Das heißt, dass die Drehrichtung der Hauptwelle jeweils in einem ersten und in einem zweiten Wendepunkt umgekehrt wird.

Auf diese Weise ist der Hub der Nadelbalkenanordnung in Einstichrichtung auf einfache Weise durch die Steuereinrichtung der Nadelmaschine bzw. des ersten Antriebs einstellbar. Es wird somit eine Nadelmaschine mit einstellbarem Hub ohne aufwändige Mechanik geschaffen, wodurch sich eine kostengünstige Umsetzung erzielen lässt. Der Hub der Nadelbalkenanordnung in Einstichrichtung ist dabei durch die Größe des ersten Drehwinkels sowie dessen Lage bezüglich der Drehachse der ersten Hauptwelle definiert. Der Drehwinkel wiederum lässt sich durch den Anwender auf einfache Weise durch die Steuereinrichtung verstellen. Das Verstellen des Hubes der Nadelbalkenanordnung in Einstichrichtung kann dabei auf unterschiedliche Weise erfolgen. Zum einen ist es möglich, die Größe des ersten Drehwinkels, um den die erste Hauptwelle zyklisch hin- und herbewegt wird, zu verändern. Ein größerer Drehwinkel bewirkt dabei im Allgemeinen eine größere Hubbewegung. Eine weitere Möglichkeit des Verstellens des Hubs besteht darin, die Lage des ersten Drehwinkels bezüglich der Drehachse der ersten Hauptwelle zu verändern. Ist der Drehwinkel zwischen dem oberen und dem unteren Totpunkt der Bewegung des Hauptpleuels angeordnet, wird bei betragsmäßig gleichem ersten Drehwinkel ein größerer Hub in Einstichrichtung erzeugt, als bei Anordnung des ersten Drehwinkels symmetrisch zum oberen oder unteren Totpunkt. Beliebige Zwischenpositionen und Größen des Drehwinkels sind denkbar. Der Hub der Nadelbalkenanordnung in Einstichrichtung kann somit beliebig verändert und an die gegebenen Anforderungen angepasst werden. Eine aufwändige mechanische Konstruktion oder eine aufwändige Kinematik ist nicht notwendig. Vielmehr kann die Einstellung des Hubs der Nadelbalkenanordnung in Einstichrichtung durch Steuerung des ersten Antriebs erfolgen, der eine entsprechend wechselnde Drehbewegung auf die erste Hauptwelle überträgt. Dies bildet eine einfache und kostengünstig umzusetzende Möglichkeit zur Einstellung des Hubs der Nadelbalkenanordnung in Einstichrichtung bei einer Nadelmaschine.

Die Einstichrichtung ist im Wesentlichen senkrecht zur Förderrichtung der Vliesbahn ausgerichtet. Bei üblicher Aufstellung einer Nadelmaschine verläuft die Einstichrichtung somit im Wesentlichen vertikal.

Vorzugsweise beträgt der erste Drehwinkel zwischen 2 Grad und 178 Grad, mehr bevorzugt zwischen 10 Grad und 90 Grad. Diese Winkelbereiche wirken sich besonders vorteilhaft auf den Vernadelungsprozess aus. Im Allgemeinen bewirken größere Drehwinkel einen größeren Hub der Nadelbalkenanordnung, erfordern zugleich jedoch ein größeres Drehmoment zum Antrieb der Hauptwelle. Kleinere Drehwinkel hingegen bewirken einen geringeren Hub der Nadelbalkenanordnung, sind jedoch auch mit einem geringeren Drehmoment an der Welle zu bewerkstelligen. Es versteht sich, dass der erste Drehwinkel vom Fachmann beliebig an die vorliegenden Anforderungen angepasst werden kann, sodass insbesondere auch kleinere und größere Winkel anwendbar sind.

In einer bevorzugten Ausführungsform umfasst die Antriebseinrichtung zusätzlich einen zweiten Antrieb und eine zweite Hauptwelle, wobei an der zweiten Hauptwelle ein zweiter Hauptpleuel exzentrisch gelagert ist, der die zweite Hauptwelle mit der Nadelbalkenanordnung gelenkig verbindet. Der zweite Antrieb ist dabei derart angesteuert, dass er die zweite Hauptwelle zyklisch um einen vorbestimmten zweiten Drehwinkel hin- und herbewegt, wobei der zweite Drehwinkel vorzugsweise zwischen 2 Grad und 178 Grad, bevorzugt zwischen 10 Grad und 90 Grad beträgt.

Das Vorsehen einer zweiten Hauptwelle und eines zweiten Hauptpleuels bietet den Vorteil, dass die Lasten, die auf die Welle-Pleuel-Kombination und deren Antrieb wirken, reduziert werden. Ist nun sowohl an der ersten als auch an der zweiten Hauptwelle ein separater Antrieb vorgesehen, wird das von jedem Antrieb bereitzustellende Drehmoment ebenfalls reduziert. Auf diese Weise können kleinere Antriebe eingesetzt werden, oder aber die Drehgeschwindigkeiten der Antriebe erhöht werden. Das unabhängige Antreiben der ersten und der zweiten Hauptwelle bietet insbesondere den Vorteil, dass der erste und der zweite Drehwinkel unabhängig voneinander eingestellt werden können. Dies bietet dem Anwender eine Vielzahl von Möglichkeiten, die Bewegung der Nadelbalkenanordnung zu beeinflussen. Auf den bevorzugten Bereich der Größe des zweiten Drehwinkels treffen die zuvor bezüglich der Größe des ersten Drehwinkels beschriebenen Vorteile zu.

In einer Ausführungsform sind der erste Antrieb und der zweite Antrieb derart angesteuert, dass der erste Drehwinkel gleich dem zweiten Drehwinkel ist und die erste und die zweite Hauptwelle gleichphasig bewegt werden, um eine gleichförmige Hubbewegung der Hauptpleuel und der Nadelbalkenanordnung zu erreichen.

Es ist dabei bevorzugt, dass der erste Antrieb und der zweite Antrieb derart angesteuert sind, dass sie die erste und die zweite Hauptwelle gegenläufig hin- und herbewegen. Auf diese Weise können Kräfte, die aufgrund der rotatorischen Bewegung der Hauptwellen und der Hauptpleuel hervorgerufen werden, in Förderrichtung der Vliesbahn ausgeglichen werden. Insbesondere werden dadurch ungewünschte Schwingungen der Antriebseinrichtung und der Nadelmaschine reduziert.

In einer alternativen Ausführungsform sind der erste Antrieb und der zweite Antrieb derart angesteuert, dass die erste und die zweite Hauptwelle phasenverstellt bewegt werden. Der Zeitpunkt, zu dem der erste Hauptpleuel einen maximalen oder minimalen Hub erreicht bzw. eine Richtungsumkehr der ersten Hauptwelle stattfindet, ist infolgedessen verschieden von dem Zeitpunkt, zu dem der zweite Hauptpleuel einen maximalen oder minimalen Hub erreicht bzw. eine Richtungsumkehr der zweiten Hauptwelle stattfindet. Zusätzlich oder alternativ sind in einer Ausführungsform der erste Antrieb und der zweite Antrieb derart angesteuert, dass der erste Drehwinkel ungleich dem zweiten Drehwinkel ist. Der vom ersten Hauptpleuel maximal erreichbare Hub ist dadurch verschieden von dem maximal erreichbaren Hub des zweiten Hauptpleuels. Durch diese beiden Möglichkeiten kann jeweils ein Kippen der Nadelbalkenanordnung relativ zur Ebene der Vliesbahn, das heißt ein Kippen in oder entgegen der Förderrichtung erzeugt werden. Auf diese Weise sind die Einstichzeitpunkte von Nadeln am vorderen Rand des Nadelbretts und am hinteren Rand des Nadelbretts verschieden.

Vorzugsweise umfassen der erste Antrieb und/oder der zweite Antrieb einen Elektromotor, mehr bevorzugt einen Torque- oder einen Servomotor. Diese Motorentypen sind besonders gut zum Erzeugen von Drehbewegungen mit zyklisch wechselnder Drehrichtung geeignet. Vor allem ermöglichen sie das hochdynamische Hin- und Herbewegen der Hauptwellen, das durch einen hochfrequenten Wechsel der Drehrichtungen gekennzeichnet ist. Eine bevorzugte Frequenz liegt im Bereich von 1.500 bis 3.000 Hübe pro Minute.

In einer besonders bevorzugten Ausführungsform umfasst die Nadelmaschine weiterhin eine Nebenantriebseinrichtung zum Bewegen der Nadelbalkenanordnung in einer Förderrichtung der Vliesbahn, die quer zur Einstichrichtung verläuft. Die Nebenantriebseinrichtung umfasst einen Nebenantrieb und eine Nebenwelle, wobei an der Nebenwelle ein Nebenpleuel exzentrisch gelagert ist, der die Nebenwelle mit der Nadelbalkenanordnung gelenkig verbindet. Der Nebenantrieb ist dabei derart angesteuert, dass er die Nebenwelle zyklisch um einen vorbestimmten dritten Drehwinkel hin- und herbewegt. Dadurch ist es möglich, zusätzlich auch den Hub der Nadelbalkenanordnung in Förderrichtung der Vliesbahn vorteilhaft an die gegebenen Anforderungen anzupassen. Diese Ausführungsform bietet weiterhin den Vorteil, dass keine aufwändige Mechanik zum Verstellen des Hubs in Förderrichtung notwendig ist.

In einer zweiten alternativen erfindungsgemäßen Ausführungsform wird ein Verfahren zum Vernadeln einer Vliesbahn unter Verwendung einer Nadelmaschine vorgesehen. Die Nadelmaschine umfasst eine Nadelbalkenanordnung, die mindestens einen Nadelbalken umfasst, eine Antriebseinrichtung zum Hin- und Herbewegen der Nadelbalkenanordnung in einer Einstichrichtung und eine Nebenantriebseinrichtung zum Bewegen der Nadelbalkenanordnung in einer Förderrichtung der Vliesbahn, die quer zur Einstichrichtung verläuft. Die Antriebseinrichtung umfasst dabei einen ersten Antrieb und eine erste Hauptwelle, wobei an der ersten Hauptwelle ein erster Hauptpleuel exzentrisch gelagert ist, der die Hauptwelle mit der Nadelbalkenanordnung gelenkig verbindet. Die Nebenantriebseinrichtung umfasst einen Nebenantrieb und eine Nebenwelle, wobei an der Nebenwelle ein Nebenpleuel exzentrisch gelagert ist, der die Nebenwelle mit der Nadelbalkenanordnung gelenkig verbindet. Dabei ist der Nebenantrieb derart angesteuert, dass er die Nebenwelle zyklisch um einen vorbestimmten Drehwinkel hin- und herbewegt.

Auf diese Weise ist der Hub der Nadelbalkenanordnung in Förderrichtung der Vliesbahn auf einfache Art und Weise durch die Steuereinrichtung der Nadelmaschine bzw. des Nebenantriebs einstellbar. Es wird somit eine Nadelmaschine mit einstellbarem Hub ohne aufwändige Mechanik geschaffen, wodurch sich eine kostengünstige Umsetzung erzielen lässt. Der Hub der Nadelbalkenanordnung in Förderrichtung des Vlieses lässt sich so einfach und schnell an die gegebenen Anforderungen, insbesondere an die Fördergeschwindigkeit, Dicke und das Material der Vliesbahn anpassen. Der Hub der Nadelbalkenanordnung in Förderrichtung ist dabei durch die Größe des vorbestimmten Drehwinkels sowie dessen Lage bezüglich der Drehachse der Nebenwelle definiert. Der Drehwinkel wiederum lässt sich durch den Anwender auf einfache Weise durch die Steuereinrichtung verstellen. Das Verstellen des Hubes der Nadelbalkenanordnung in Förderrichtung kann dabei auf unterschiedliche Weise erfolgen. Der Einsatz einer sich zyklisch hin- und herbewegenden Nebenwelle bietet insbesondere den Vorteil, dass der Hub in Förderrichtung auf einfache Weise verstellt werden kann. Zudem kann die Nadeleingriffskinematik vom Anwender durch Beeinflussung der Differenzgeschwindigkeit zwischen den Nadeln und der Vliesbahn beliebig optimiert werden.

Vorzugsweise ist der Drehwinkel der Nebenwelle stufenlos einstellbar, sodass er nach Belieben eingestellt werden kann.

Bevorzugt beträgt der Drehwinkel zwischen 2 Grad und 178 Grad, mehr bevorzugt zwischen 10 Grad und 150 Grad. Auf den bevorzugten Bereich der Größe des Drehwinkels der Nebenwelle treffen die zuvor bezüglich der Größe des ersten Drehwinkels beschriebenen Vorteile ebenfalls zu.

Vorzugsweise ist der erste Antrieb in dieser Ausführungsform derart angesteuert, dass er die erste Hauptwelle umlaufend bewegt. Dabei ist es auch möglich, eine zweite Hauptwelle vorzusehen, die auf geeignete Weise, beispielsweise mittels einer Stirnradstufe, mit der ersten Hauptwelle gekoppelt ist und in der Regel gegenläufig zur ersten Hauptwelle betrieben wird.

Vorzugsweise umfasst der Nebenantrieb einen Elektromotor, vorzugsweise einen Torque- oder einen Servomotor, die besonders gut zum Erzeugen von Drehbewegungen mit zyklisch wechselnder Drehrichtung geeignet sind. Vor allem ermöglichen sie auch das hochdynamische Hin- und Herbewegen der Nebenwelle, das durch einen hochfrequenten Wechsel der Drehrichtungen gekennzeichnet ist. Eine bevorzugte Frequenz liegt im Bereich von 1.500 bis 3.000 Hübe pro Minute.
- Fig. 1: zeigt eine schematische Perspektivansicht einer Ausführungsform einer Nadelmaschine;
- Fig. 2a-2e: zeigen die Nadelmaschine nach Fig. 1 in einer schematischen Frontansicht zu unterschiedlichen Zeitpunkten eines Bewegungszyklus;
- Fig. 3a: zeigt eine schematische Perspektivansicht einer alternativen Ausführungsform einer Nadelmaschine;
- Fig. 3b: zeigt die Nadelmaschine nach Fig. 3a in einer schematischen Frontansicht;
- Fig. 4a: zeigt eine schematische Perspektivansicht einer weiteren alternativen Ausführungsform einer erfindungsgemäßen Nadelmaschine;
- Fig. 4b: zeigt die Nadelmaschine nach Fig. 4a in einer Frontansicht; und
- Fig. 5a, b: zeigen schematisch den Zusammenhang zwischen der Winkelposition einer Welle bzw. eines Pleuels und dem Hub der Nadelbalkenanordnung.

In allen Figuren sind nur die zur Beschreibung der Erfindung wesentlichen Komponenten einer Nadelmaschine dargestellt. Zur besseren Übersicht sind beispielsweise kein Maschinengehäuse, keine Vliesbahn, keine Niederhalterplatte und keine Stichplatte dargestellt, deren Anordnung dem Fachmann bekannt ist.

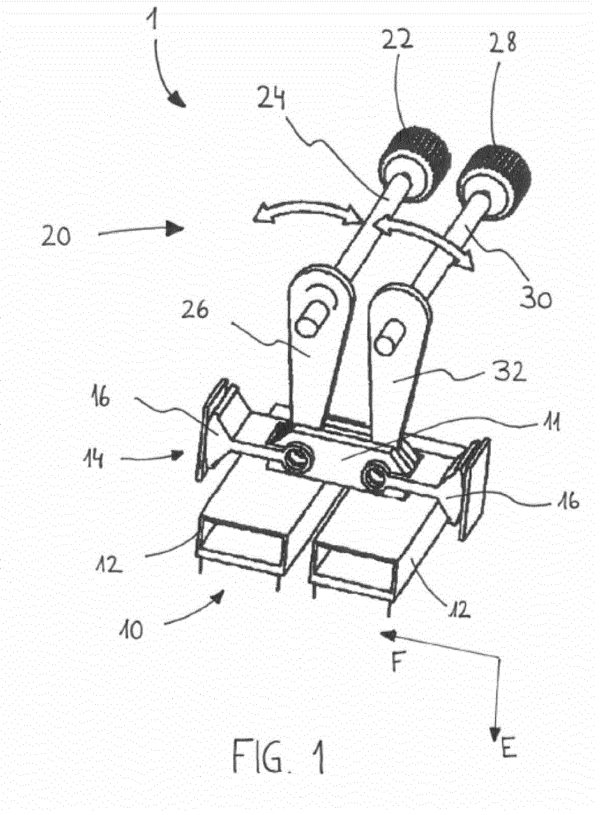

Fig. 1 zeigt schematisch einen Ausschnitt einer Nadelmaschine 1 in einer perspektivischen Ansicht. Die Nadelmaschine 1 umfasst eine Nadelbalkenanordnung 10 und eine Antriebseinrichtung 20. Die Nadelbalkenanordnung 10 umfasst mindestens einen Nadelbalken 12. In der dargestellten Ausführungsform sind zwei Nadelbalken 12 vorgesehen, die an einem Nadelbalkenträger 11 befestigt sind und von diesem getragen werden. Beispielhaft sind hier in einer der Antriebseinrichtung 20 abgewandten Fläche jedes Nadelbalkens 12 ein Nadelbrett mit jeweils nur einer Nadel an den Rändern dargestellt. Es versteht sich, dass in der tatsächlichen Umsetzung einer erfindungsgemäßen Nadelmaschine 1 eine Vielzahl von Nadelreihen an der Unterseite jedes Nadelbretts angeordnet ist.

In der dargestellten Ausführungsform ist eine Vertikalführung 14 vorgesehen, die zwei Wälzhebel 16 umfasst. Die Wälzhebel 16 sind mit dem Nadelbalkenträger 11 gelenkig verbunden und rollen an einer Gegenfläche des Maschinengehäuses auf bekannte Weise ab. Durch die Vertikalführung 14 wird die Nadelbalkenanordnung 10 in Förderrichtung der Vliesbahn, die in Fig. 1 durch den Pfeil F angedeutet ist, im Wesentlichen festgelegt. Im hier beschriebenen Ausführungsbeispiel ist die Einstichrichtung der Nadeln in die Vliesbahn, die in der Fig. 1 durch den Pfeil E angedeutet ist, vertikal ausgerichtet. Es versteht sich, dass gegebenenfalls von der exakt vertikalen Ausrichtung abgewichen werden kann.

Die Antriebseinrichtung 20 bewegt die Nadelbalkenanordnung 10 in der Einstichrichtung E hin- und her. Regelmäßig entspricht dies einer vertikalen Hubbewegung der Nadelbalken 12. Die Antriebseinrichtung 20 umfasst zumindest einen ersten Antrieb 22, eine erste Hauptwelle 24 und einen ersten Hauptpleuel 26. In der dargestellten bevorzugten Ausführungsform umfasst die Antriebseinrichtung 20 zudem einen zweiten Antrieb 28, eine zweite Hauptwelle 30 und einen zweiten Hauptpleuel 32. Der erste Hauptpleuel 26 und der zweite Hauptpleuel 32 sind jeweils gelenkig mit der Nadelbalkenanordnung 10 verbunden und vorzugsweise am Nadelbalkenträger 11 befestigt. Der erste Hauptpleuel 26 ist mit seinem der Nadelbalkenanordnung 10 abgewandten Ende gelenkig mit der ersten Welle 24 verbunden, während der zweite Hauptpleuel 32 mit seinem der Nadelbalkenanordnung 10 abgewandten Ende gelenkig mit der zweiten Hauptwelle 30 verbunden ist. Der erste und der zweite Hauptpleuel 26, 32 sind dabei derart mit der ersten und der zweiten Hauptwelle 24, 30 verbunden, dass eine Drehbewegung der Hauptwellen 24, 30 in eine im Wesentlichen lineare Bewegung der Nadelbalkenanordnung 10 umgesetzt wird. Besonders gut eignet sich hierzu eine exzentrische Verbindung der Hauptpleuel 26, 32 mit den Hauptwellen 24, 30, wobei jeweils ein Pleuelauge drehbar auf einem Exzenterabschnitt der jeweiligen Welle gelagert ist.

Im Gegensatz zu bekannten Nadelmaschinen, bei denen die Hauptwellen umlaufend angetrieben werden, werden die erste Hauptwelle 24 und die zweite Hauptwelle 30 jeweils um einen vorbestimmten Drehwinkel hin- und herbewegt. Diese zyklische Hin- und Herbewegung ist in Fig. 1 durch die zwei geschwungenen Doppelpfeile über den Hauptwellen 24, 30 angedeutet. Um dieses zyklische Hin- und Herbewegen der ersten und der zweiten Hauptwelle 24, 30 zu erzeugen, sind der erste Antrieb 22 und der zweite Antrieb 28 derart angesteuert, dass sie die Drehrichtung der jeweiligen Hauptwelle 24, 30 zyklisch umkehren. Eine Steuereinrichtung (nicht dargestellt) gibt dem ersten und dem zweiten Antrieb 22, 28 die Größe und die Ausrichtung des ersten und des zweiten Drehwinkels bezüglich der jeweiligen Drehachse sowie die Drehgeschwindigkeit vor. Vorzugsweise sind die Drehwinkel, um die sich die erste Hauptwelle 24 und die zweite Hauptwelle 30 zyklisch hin- und herbewegen, individuell und stufenlos einstellbar.

Als Antriebe 22, 28 eignen sich Elektromotoren besonders gut. Insbesondere Torque- oder Servomotoren sind dazu geeignet, die Hauptwellen rotatorisch anzutreiben und dabei die notwendige Anzahl an Richtungswechseln und Hüben umzusetzen. Es versteht sich, dass die Dimensionierung der Antriebe im Wesentlichen von den anliegenden Drehmomenten abhängt. Vorzugsweise soll eine Frequenz von 1.500 bis 3.000 Hüben pro Minute realisierbar sein. Die Anzahl der dafür notwendigen Richtungswechsel der Drehbewegung der Hauptwellen 24, 30 hängt dabei auch von der Ausrichtung der Drehbewegung bezüglich der Drehachse der jeweiligen Welle zusammen, wie weiter unten noch näher beschrieben wird. Sollte es erforderlich sein, kann auch mehr als ein Antrieb pro Hauptwelle 24, 30 vorgesehen sein. Dies ist insbesondere abhängig vom aufzubringenden Drehmoment und Leistungsbedarf. Ebenso ist es neben der dargestellten direkten Verbindung zwischen dem ersten Antrieb 22 und der ersten Hauptwelle 24 bzw. dem zweiten Antrieb 28 und der zweiten Hauptwelle 30 denkbar, die Antriebe 22, 28 jeweils indirekt, z.B. mittels eines Zugmittelgetriebes mit einem Zahnriemen, auf die entsprechende Hauptwelle 24, 30 zu übertragen.

Es versteht sich, dass das Prinzip der Erfindung auch anwendbar ist, wenn nur ein Antrieb, eine Hauptwelle und ein Hauptpleuel vorgesehen sind. Weiterhin ist es denkbar mehr als zwei Antriebe, zwei Hauptwellen und zwei Hauptpleuel einzusetzen, wobei sich die Kinematik entsprechend komplexer gestaltet. Zudem sind in der Fig. 1 beispielhaft zwei Nadelbalken 12 vorgesehen. Es versteht sich auch hier, dass entsprechend den vorliegenden Anforderungen nur ein oder beliebig viele Nadelbalken 12 einsetzbar sind.

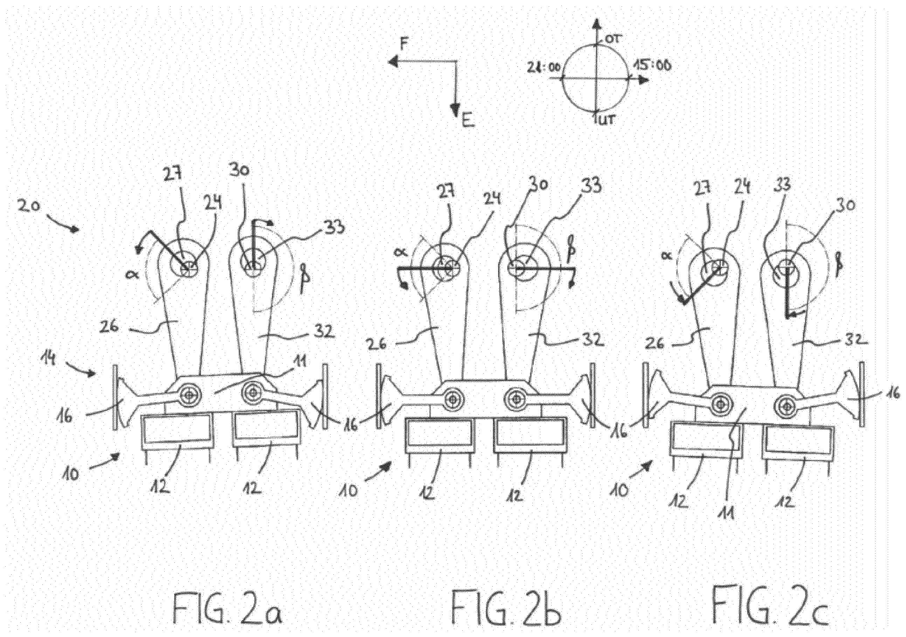

Die Fig. 2a bis 2e zeigen beispielhaft und schematisch einen vollständigen Bewegungszyklus der Nadelmaschine 1 anhand der zu Fig. 1 beschriebenen Ausführungsform. Zur Beschreibung des Bewegungszyklus wird ein für alle Figuren gültiges globales Koordinatensystem eingeführt, das durch die Förderrichtung F der Vliesbahn und die Einstichrichtung E gekennzeichnet ist. Des Weiteren wird ein für alle Figuren gültiges lokales Koordinatensystem eingeführt, das zur Beschreibung der Position eines Pleuels bzgl. der jeweiligen Welle dient. Bei einer umlaufenden Bewegung einer Welle bzw. eines Pleuels bildet die Mittelachse des mit der Welle verbundenen Pleuelauges eine Kreisbahn um die Drehachse der jeweiligen Welle ab. Gemäß der allgemeinen Lehre von Exzenterwellen-Pleuel-Anordnungen ist ein oberer Totpunkt (OT) und ein unterer Totpunkt (UT) definiert, in denen die Mittelpunkte der beiden Pleuelaugen eines Pleuels auf einer Geraden mit dem Mittelpunkt der jeweiligen Welle liegen. Jeweils symmetrisch zwischen dem OT und dem UT sind entsprechend im Uhrzeigersinn eine 15:00-Uhr-Position und eine 21:00-Uhr-Position definiert. Es versteht sich, dass beliebige Zwischenposition entsprechend eines Uhren-Ziffernblattes angegeben werden können. Dieses lokale Koordinatensystem hat seinen Ursprung jeweils auf der Mittelachse der Welle, auf der der Pleuel exzentrisch gelagert ist.

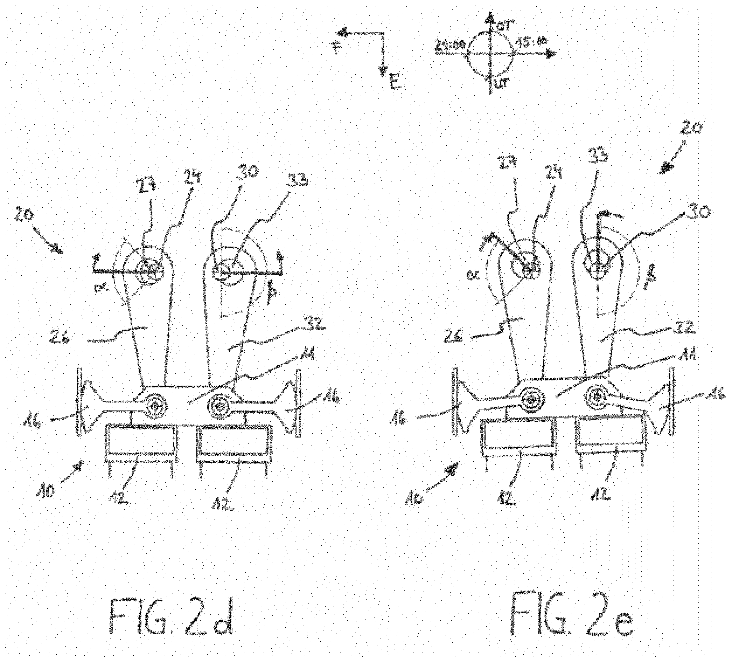

In der in Fig. 2 dargestellten Ausführungsform befinden sich der OT und der UT des ersten und des zweiten Hauptpleuels 26, 32 entsprechend auf einer parallel zur Einstichrichtung E ausgerichteten Achse. Die 15:00-Uhr-Position und die 21:00-Uhr-Position befinden sich auf einer parallel zur Förderrichtung F ausgerichteten Achse. Um die Winkelposition des ersten und des zweiten Hauptpleuels 26, 32 bzw. des jeweiligen Pleuelauges 27, 33 in den Fig. 2a-2e zu veranschaulichen, ist weiterhin ein Strahl eingezeichnet, der den Mittelpunkt der jeweiligen Hauptwelle 24, 30 mit dem jeweiligen Mittelpunkt des Pleuelauges 27, 33 verbindet. Der Strahl läuft während eines Bewegungszyklus einen vorbestimmten Drehwinkel ab, wobei die Bewegungsrichtung der jeweiligen Welle-Pleuel-Anordnung durch einen Pfeil an dem jeweiligen Strahl gekennzeichnet ist.

Der Bewegungszyklus nach Fig. 2a-2e erfolgt zwischen einer oberen Position der Nadelbalkenanordnung 10 (Fig. 2a und 2e) und einer unteren Position der Nadelbalkenanordnung 10 (Fig. 2c), wobei in den Fig. 2b und 2d eine Zwischenposition dargestellt ist. In der dargestellten Ausführungsform wird die erste Hauptwelle 24 zyklisch um einen vorbestimmten ersten Drehwinkel α hin- und herbewegt und die zweite Hauptwelle 30 zyklisch um einen vorbestimmten zweiten Drehwinkel β hin- und herbewegt. In diesem Beispiel ist der erste Drehwinkel α ungleich dem zweiten Drehwinkel β. Beide Drehwinkel α, β sind in diesem Fall symmetrisch zu einer parallel zur Förderrichtung F ausgerichteten Achse angeordnet. Genauer ist der erste Drehwinkel α und somit die Bewegung des ersten Hauptpleuels 26 symmetrisch zur 21:00-Uhr-Position der ersten Hauptwelle 24 angeordnet und der zweite Drehwinkel β bzw. die Position des zweiten Hauptpleuels 32 symmetrisch zur 15:00-Uhr-Position der zweiten Hauptwelle 30 angeordnet. Aufgrund der sich unterscheidenden Drehwinkel α, β ist der zweite Hauptpleuel 32 in der in Fig. 2a dargestellten Ausgangsposition höher angeordnet (vorliegend im OT) als der erste Hauptpleuel 26. Daraus ergibt sich eine bezüglich der Förderrichtung F gekippte Anordnung des Nadelbalkenträgers 11, der gelenkig mit dem ersten und dem zweiten Hauptpleuel 26, 32 verbunden ist. Es ist ersichtlich, dass die erste Hauptwelle 24 und die zweite Hauptwelle 30 gegenläufig bewegt werden, nämlich die erste Hauptwelle 24 zunächst entgegen dem Uhrzeigersinn und die zweite Hauptwelle 30 im Uhrzeigersinn.

In der in Fig. 2a dargestellten Ausgangsposition befinden sich der erste Hauptpleuel 26 und der zweite Hauptpleuel 32 jeweils in ihrem oberen Wendepunkt. In dieser Ausgangsposition ist noch kein Hub der Nadelbalkenanordnung 11 in Einstichrichtung E erfolgt. Die erste Hauptwelle 24 und die zweite Hauptwelle 30 werden nun gegenläufig bewegt, so dass die Nadelbalkenanordnung 10 einen Hub in Einstichrichtung E erfährt.

In Fig. 2b ist eine Zwischenposition dargestellt, in der sich der erste Hauptpleuel 26 in der 21:00-Uhr-Position und der zweite Hauptpleuel 32 in der 15:00-Uhr-Position befindet. Aufgrund der symmetrischen Anordnung des ersten und des zweiten Drehwinkels α, β zu diesen Positionen wurden der erste Hauptpleuel 26 und der zweite Hauptpleuel 32 und somit die Nadelbalkenanordnung 10 um einen halben Hub in Einstichrichtung E bewegt. Vorzugsweise wird die in Fig. 2b dargestellte Zwischenposition kontinuierlich durchlaufen.

In Fig. 2c sind der erste Hauptpleuel 26, der zweite Hauptpleuel 32 und die Nadelanordnung 10 in einer unteren Position dargestellt. Die erste Hauptwelle 24 bzw. der erste Hauptpleuel 26 befindet sich in einem unteren Wendepunkt, in dem der zwischen der Achse der ersten Hauptwelle 24 und der Achse des Pleuelauges 27 gebildete Strahl auf dem Rand des ersten Drehwinkels α liegt. Die zweite Hauptwelle 30 bzw. der zweite Hauptpleuel 32 befindet sich ebenfalls in einem unteren Wendepunkt, in dem der zwischen der Achse der zweiten Hauptwelle 30 und der Achse des Pleuelauges 33 gebildete Strahl auf dem Rand des zweiten Drehwinkels β liegt. In diesen Positionen haben der erste Hauptpleuel 26 und der zweite Hauptpleuel 32 und somit die Nadelbalkenanordnung 10 den maximalen Hub in Einstichrichtung E erreicht. Aufgrund der unterschiedlichen Drehwinkel α, β ist auch in dieser Position die Nadelbalkenanordnung 10 bezüglich der Förderrichtung F gekippt. Zumindest in dieser unteren Position nach Fig. 2c stehen die Nadeln der Nadelbalken 12 in Eingriff mit der zu vernadelnden Vliesbahn. Im unteren Wendepunkt des ersten und des zweiten Hauptpleuels 26, 32 bzw. der Nadelbalkenanordnung 10 erfolgt die Richtungsumkehr der Drehbewegung der ersten und der zweiten Hauptwelle 24, 30.

Wie in Fig. 2d zu sehen ist und durch die zwei gekrümmten Pfeile an den die Drehbewegung anzeigenden Strahlen angedeutet ist, bewegt sich die erste Hauptwelle 24 nun im Uhrzeigersinn und die zweite Hauptwelle gegen den Uhrzeigersinn. Diese Bewegung erfolgt über die in Fig. 2d dargestellte Zwischenposition hinaus und zurück in die Ausgangsposition nach Fig. 2e. Die Position nach Fig. 2e entspricht der Ausgangsposition nach Fig. 2a, sodass ein neuer Bewegungszyklus durch erneute Umkehr der Drehrichtung der ersten und der zweiten Hauptwelle 24, 30 beginnen kann.

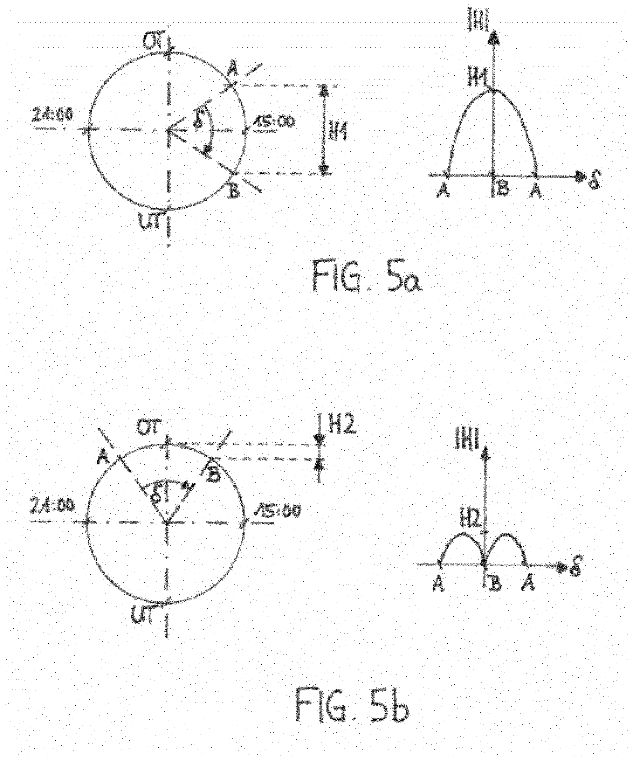

Ist ein Kippen der Nadelbalkenanordnung 10 nicht erwünscht, kann beispielsweise der erste Drehwinkel α gleich dem zweiten Drehwinkel β gewählt werden, wobei beide Drehwinkel α, β in gleicher Lage bezüglich der jeweiligen Achse der Hauptwellen 24, 30 anzuordnen sind. Ebenso ist ersichtlich, dass die Größe des ersten und zweiten Drehwinkels α, β die Hubhöhe in Einstichrichtung im Wesentlichen bestimmt. Weitere Zusammenhänge zwischen dem Drehwinkel und dem Hub gehen aus Fig. 5 sowie der zugehörigen Beschreibung hervor.

Im dargestellten Fall werden die erste Hauptwelle 24 und die zweite Hauptwelle 30 gleichphasig bewegt. Das heißt, dass jeweils der obere Wendepunkt und der untere Wendepunkt und somit auch die Punkte minimalen und maximalen Hubs gleichzeitig erreicht werden. Entsprechend ist die zweite Hauptwelle 30 aufgrund des größeren Drehwinkels mit einer höheren Drehgeschwindigkeit zu bewegen als die erste Hauptwelle 24.

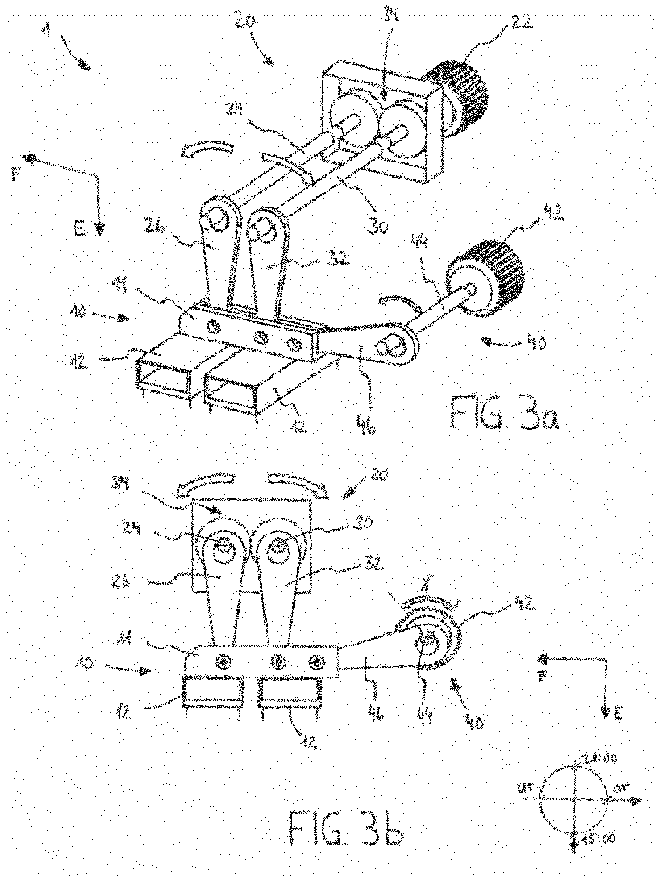

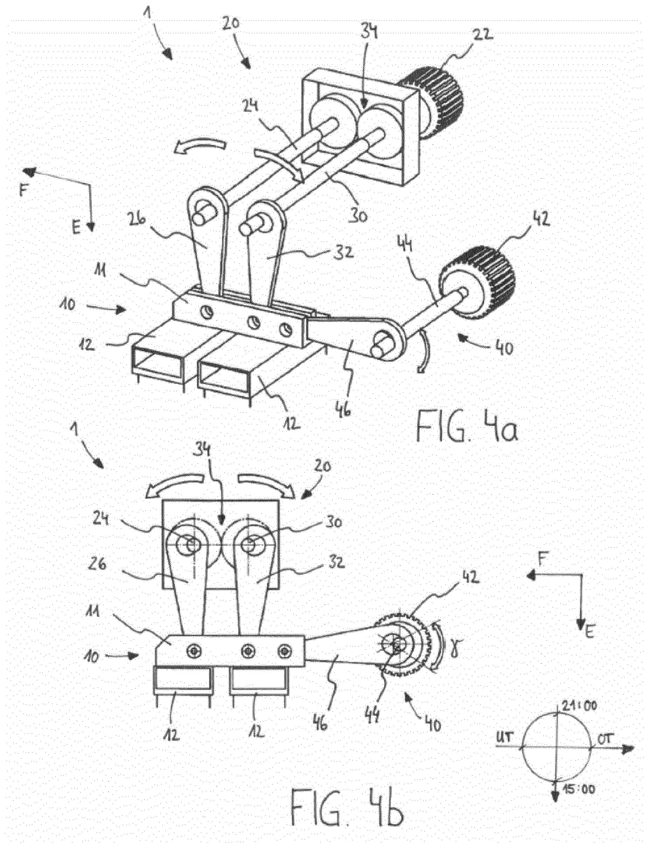

In den Fig. 3 und 4 sind zwei alternative Ausführungsformen einer erfindungsgemäßen Nadelmaschine 1 dargestellt. Der wesentliche Unterschied zu der Nadelmaschine 1 nach Fig. 1 und 2 ist, dass die Nadelmaschine 1 nach Fig. 3 und 4 eine Nebenantriebseinrichtung 40 umfasst. Die Nebenantriebseinrichtung 40 dient zum Bewegen der Nadelbalkenanordnung 10 in der Förderrichtung F der Vliesbahn. Bei üblicher Aufstellung einer Nadelmaschine entspricht dies einer horizontalen Bewegung der Nadelbalkenanordnung 10. Folglich bewirkt die Nebenantriebseinrichtung 40 einen horizontalen Hub der Nadelbalkenanordnung 10 bzw. einen Hub der Nadelbalkenanordnung 10 quer zur Einstichrichtung E.

Die Nebenantriebseinrichtung 40 umfasst einen Nebenantrieb 42, eine Nebenwelle 44 und einen Nebenpleuel 46, der exzentrisch an der Nebenwelle 44 gelagert ist und diese mit der Nadelbalkenanordnung 10 gelenkig verbindet. In der dargestellten Ausführungsform ist nur ein Antrieb, beispielsweise der erste Antrieb 22, vorgesehen, um eine aus erster und zweiter Hauptwelle 24, 30 anzutreiben. Die beiden Hauptwellen 24, 30 sind in diesem Fall durch ein Getriebe, vorzugsweise eine Stirnradstufe 34, miteinander verbunden. Bevorzugt ist die Stirnradstufe 34 derart ausgebildet, dass sich die erste Hauptwelle 24 und die zweite Hauptwelle 30 gegenläufig bewegen, wie durch die zwei gekrümmten Pfeile über der jeweiligen Welle angedeutet ist. Zudem werden die erste Hauptwelle 24 und die zweite Hauptwelle 30 in der dargestellten Ausführungsform umlaufend angetrieben.

Der Nebenantrieb 42 wird erfindungsgemäß derart angesteuert, dass er die Nebenwelle 44 zyklisch um einen vorbestimmten Drehwinkel hin- und herbewegt. Die zyklische Hin- und Herbewegung der Nebenwelle 44 ist in den Fig. 3 und 4 durch einen gekrümmten Doppelpfeil über bzw. neben der Nebenwelle 44 angedeutet. Das zyklische Hin- und Herbewegen erfolgt durch Umkehren der Drehrichtung der Nebenwelle 44 in zwei Wendepunkten, zwischen denen der vorbestimmte Drehwinkel der Nebenwelle 44 definiert ist. Der Nebenantrieb 42 kann die Nebenwelle 44 dabei direkt anreiben oder mittels eines Getriebes, beispielsweise eines Zugmittelgetriebes mit Zahnriemen mit dieser verbunden sein.

Die Nebenantriebsanordnung 40 zwingt der Nadelbalkenanordnung 10 eine Bewegungskomponente in Förderrichtung F der Vliesbahn auf. Diese Bewegungskomponente überlagert sich mit der Bewegungskomponente der Nadelbalkenanordnung 10 in Einstichrichtung E, die der Nadelbalkenordnung 10 durch die Antriebseinrichtung 20 aufgezwungen wird. In Abhängigkeit des Hubs in Einstichrichtung E und des Hubs in Förderrichtung F sowie der zeitlichen Überlagerung der beiden Bewegungskomponenten wird die Nadelbalkenanordnung 10 auf einer mehr oder weniger elliptischen Bewegungsbahn bewegt.

Vorzugsweise entspricht die Geschwindigkeit der Nadelbalkenanordnung 10 in Förderrichtung F der Fördergeschwindigkeit der Vliesbahn, während die Nadeln der Nadelbalken 12 mit der Vliesbahn in Eingriff stehen. Auf diese Weise kann ein Verzug innerhalb der Vliesbahn unterbunden und auf die Nadeln wirkende Querkräfte, die aus einer Relativgeschwindigkeit zwischen der Vliesbahn und den Nadeln resultieren, reduziert werden.

In einer alternativen Ausführungsform ist es denkbar, zusätzlich zur Nebenwelle 44 die erste und zweite Hauptwelle 24, 30 zyklisch hin- und herzubewegen. Bezüglich einer zyklischen Bewegung der ersten und der zweiten Hauptwelle 24, 30 wird auf die Beschreibung zu den Fig. 1 und 2 verwiesen. Falls nur eine Hauptwelle vorliegt, kann auch nur diese zyklisch hin- und herbewegt werden.

Wie aus den Fig. 3b und 4b hervorgeht, ist das angegebene lokale Koordinatensystem gegenüber dem nach Fig. 2a bis 2e um 90° gedreht, um der Ausrichtung der Hubbewegung des Nebenpleuels 46 zu entsprechen. Genauer ist das lokale Koordinatensystem derart gedreht, dass der obere Totpunkt (OT) und der untere Totpunkt (UT) auf einer Achse parallel zur Förderrichtung F liegen. Entsprechend sind symmetrisch zwischen dem OT und dem UT im Uhrzeigersinn die 15:00-Uhr-Position und die 21:00-Uhr-Position angegeben. Dieses lokale Koordinatensystem dient der Beschreibung der Position des Nebenpleuels 46 bezüglich der Nebenwelle 44 und hat seinen Ursprung auf der Achse der Nebenwelle 44.

Aus der Zusammenschau der Fig. 3b und 4b ergibt sich, dass der wesentliche Unterschied zwischen den beiden darin dargestellten Ausführungsformen darin liegt, dass der Drehwinkel γ der Nebenwelle 44 in Fig. 3b symmetrisch zur 21:00-Uhr-Position angeordnet ist, während der Drehwinkel γ der Nebenwelle in der Ausführungsform nach Fig. 4b symmetrisch zum OT angeordnet ist. Die Folgen der jeweiligen Anordnung des dritten Drehwinkels γ gehen allgemein aus der Beschreibung zu Fig. 5 hervor.

Aufgrund des an der Nebenwelle 44 zur Bewegung der Nadelbalkenanordnung 10 benötigten Drehmoments kann es weiterhin wünschenswert sein, einen zweiten Nebenantrieb 42 zum Bewegen der Nebenwelle 44 vorzusehen. Es ist auch denkbar, zwei Nebenpleuel vorzusehen, die jeweils eine Nebenwelle mit der Nadelbalkenanordnung 10 gelenkig verbinden.

Der Hub der Nadelbalkenanordnung 10 in Förderrichtung F beträgt vorzugsweise 0 bis 25 mm, mehr bevorzugt 1 bis 15 mm und noch mehr bevorzugt 2 bis 8 mm. Der Betrag des Hubes sowohl in Einstichrichtung E als auch in Förderrichtung F kann jedoch auch abweichend von den angegebenen Bereichen an die jeweiligen Anforderungen, insbesondere die Dicke der Vliesbahn sowie die Fördergeschwindigkeit der Vliesbahn angepasst werden kann. Einstellbar ist der Hub durch Verstellen der Größe des vorbestimmten Drehwinkels der Welle und der Anordnung des Drehwinkels bezüglich der Drehachse der entsprechenden Welle. Auch in Förderrichtung F beträgt die Frequenz vorzugsweise 1.500 bis 3.000 Hübe pro Minute.

Für den Fachmann ist ersichtlich, dass sich die Erfindung nicht darauf beschränkt, welche aus erster und zweiter Hauptwelle 24, 30 und Nebenwelle 40 zyklisch hin- und herbewegt wird, oder um welchen Drehwinkel eine derartige Bewegung erfolgt. Vielmehr besteht der erfinderische Gedanke darin, mindestens eine Welle, die mittels eines exzentrisch auf dieser gelagerten Pleuels eine Hubbewegung einer Nadelbalkenanordnung einer Nadelmaschine hervorruft, zyklisch hin- und herzubewegen, anstatt sie umlaufend anzutreiben. Auf diese Weise kann der Hub der Nadelbalkenanordnung in Einstichrichtung E und/oder in Förderrichtung F durch Veränderung des Drehwinkels einer der angetriebenen Wellen besonders einfach durch die Steuereinrichtung der Nadelmaschine variiert werden.

Der Zusammenhang zwischen dem Drehwinkel einer Welle, auf der ein Pleuel exzentrisch gelagert ist, und dem daraus resultierenden Hub der Nadelbalkenanordnung ist allgemein unter Bezugnahme auf Fig. 5a und 5b beschrieben. Die hierbei getroffenen Aussagen treffen sowohl auf die Hauptwellen 24, 30 als auch auf die Nebenwelle 44 zu. Hierzu ist das in den Fig. 5a und 5b dargestellte Koordinatensystem entsprechend den in den Fig. 2, 3 und 4 dargestellten Koordinatensystemen auszurichten. Wenn in Bezug auf die Fig. 5a und 5b folglich von einem Hub die Rede ist, handelt es sich bei Betrachtung der Hauptwellen 24, 30 um einen Hub in Einstichrichtung E, also einen vertikalen Hub, während es sich bei der Betrachtung der Nebenwelle 44 um einen horizontalen Hub, also einen Hub in Förderrichtung F, handelt.

In den Fig. 5a und 5b ist jeweils ein lokales Koordinatensystem einer Welle 24, 30, 44 sowie schematisch der Verlauf des Betrags des Hubs über den Drehwinkel dargestellt. Dabei ist ein erster Wendepunkt mit A gekennzeichnet und ein zweiter Wendepunkt mit B gekennzeichnet. Der vorbestimmte Drehwinkel ist mit δ angegeben und zwischen dem ersten und dem zweiten Wendepunkt A, B definiert. Der Drehwinkel δ kann dabei dem ersten Drehwinkel α, dem zweiten Drehwinkel β oder dem dritten Drehwinkel γ entsprechen. Der Radius des dargestellten Kreises entspricht der Exzentrizität des Pleuels zur Welle, also dem Abstand der Achse des Pleuelauges zur Drehachse der Welle. Der Ursprung des dargestellten Koordinatensystems ist auf der Drehachse der jeweiligen Welle angeordnet.

In Fig. 5a ist der Drehwinkel δ symmetrisch zwischen dem oberen Totpunkt (OT) und dem unteren Totpunkt (UT), also symmetrisch zur 15:00-Uhr-Position angeordnet. Gleiches würde auf eine symmetrische Anordnung zur 21:00-Uhr-Position zutreffen. Die Bewegung des Pleuels bzw. der Welle erfolgt um den Drehwinkel δ zwischen dem ersten Wendepunkt A und dem zweiten Wendepunkt B. Zwischen dem ersten Wendepunkt A und dem zweiten Wendepunkt B wird die Welle durch den ihr zugeordneten Antrieb zyklisch hin- und herbewegt.

Im dargestellten Fall bildet der Wendepunkt A eine Ausgangsposition, die die Position des Pleuels bei minimalem Hub darstellt. Bezüglich des Drehwinkels δ ist in dieser Ausgangsposition kein Hub erfolgt. Werden die Welle und der Pleuel aus der Ausgangsposition (Wendepunkt A) in Richtung des zweiten Wendepunkts B bewegt, bewirkt dies einen Hub der Nadelbalkenanordnung im Wesentlichen parallel zur Verbindungsachse von OT und UT. Befinden sich die Welle und der Pleuel schließlich in dem zweiten Wendepunkt B, ist der maximale Hub, hier H1, erreicht. An dieser Stelle kehrt der der Welle zugeordnete Antrieb die Drehrichtung der Welle um, sodass sich die Welle und der Pleuel zurück in Richtung des ersten Wendepunkts A bewegen. Im Punkt A ist wieder der Punkt minimalen Hubs erreicht. Ist der Drehwinkel δ also zwischen dem OT und dem UT angeordnet, bewirkt das Bewegen der Welle und des Pleuels vom ersten Wendepunkt A zum zweiten Wendepunkt B und zurück eine Hubbewegung der Nadelbalkenanordnung 10 um den Betrag H1. Es ist ersichtlich, dass bei symmetrischer Anordnung des Drehwinkels δ zwischen dem OT und dem UT ein kleinerer Drehwinkel einen geringeren Hub bewirkt und ein größerer Drehwinkel einen größeren Hub bewirkt.

Im Gegensatz dazu ist in Fig. 5b der Drehwinkel δ symmetrisch zum OT, also symmetrisch zwischen der 21:00-Uhr-Position und der 15:00-Uhr-Position angeordnet. Gleiches würde auf eine symmetrische Anordnung um den UT zutreffen. Der erste Wendepunkt A befindet sich in diesem Fall zwischen der 21:00-Uhr-Position und dem OT und der zweite Wendepunkt B zwischen dem OT und der 15:00-Uhr-Position. Werden die Welle und der Pleuel nun von der Ausgangsposition (Wendepunkt A) in Richtung des zweiten Wendepunkts B bewegt, so ergibt sich bis zum Erreichen des OT eine Hubbewegung. Im OT ist der maximale Hub, hier H2, erreicht. Werden Welle und Pleuel zwischen dem OT und dem zweiten Wendepunkt B weiterbewegt, verringert sich der Betrag des Hubs wieder. Folglich sind der erste und der zweite Wendepunkt A, B die Punkte minimalen Hubs, während der maximale Hub H2 im OT erreicht wird. Im Wendepunkt B kehrt der der Welle zugeordnete Antrieb die Drehrichtung der Welle um, sodass sich die Welle und der Pleuel zurück in Richtung des ersten Wendepunkts A bewegen. Dabei findet eine erneute Hubbewegung statt. Dementsprechend bewirkt das Bewegen der Welle und des Pleuels aus dem ersten Wendepunkt A zum zweiten Wendepunkt B und zurück zwei Hubbewegungen der Nadelbalkenanordnung 10.

Wie aus der Zusammenschau der Fig. 5a und 5b zu erkennen ist, ist bei betragsmäßig gleichem Drehwinkel δ der Betrag des zu erreichenden Hubs bei Anordnung des Drehwinkels zwischen dem OT und dem UT deutlich größer als beim Anordnen des Drehwinkels symmetrisch zum OT oder UT. Hingegen kann bei symmetrischer Anordnung des Drehwinkels um den OT bzw. UT und gleicher Drehgeschwindigkeit der Welle eine doppelte Hubfrequenz im Vergleich zur Anordnung des Drehwinkels symmetrisch zur 15:00-Uhr-Position bzw. zur 21:00-Uhr-Position erreicht werden.

Dem Fachmann wird hierdurch eine enorme Vielfalt der Möglichkeiten zur Einstellung des Hubs der Nadelbalkenanordnung 10 ersichtlich. Es versteht sich, dass der Größe des Drehwinkels und der Anordnung desselben bezüglich des OT oder UT theoretisch keine Grenzen gesetzt sind. Die Vielfalt der möglichen zu erzeugenden Bewegungen der Nadelbalkenanordnung 10 kann weiterhin dadurch erhöht werden, dass jede aus erster und zweiter Hauptwelle und Nebenwelle einen eigenen Antrieb aufweist, der die Wellen hin- und herbewegt. Auf diese Weise kann für jede Welle ein individueller Drehwinkel und somit ein individueller Hub des entsprechenden Pleuels, sowie eine eigene Drehgeschwindigkeit eingestellt werden. Die Haupt- und Nebenwellen können weiterhin gleichphasig bewegt werden, d.h. dass die Punkte maximalen und minimalen Hubs zeitgleich erreicht werden. Alternativ können die Haupt- und Nebenwellen phasenverstellt bewegt werden.

Der Betrag des Hubs wirkt sich stets auf das aufzubringende Drehmoment an der jeweiligen Welle aus. Eine betragsmäßig große Hubbewegung erfordert ein hohes Drehmoment, während eine betragsmäßig geringere Hubbewegung ein geringeres Drehmoment erfordert. Dementsprechend kann aufgrund der geringeren Hubbewegung bei der Anordnung des Drehwinkels symmetrisch zum OT oder UT der Antrieb der Welle kleiner dimensioniert werden oder die Drehgeschwindigkeit erhöht werden.

Betrachtet man nun die Antriebseinrichtung 20 zum Bewegen der Nadelbalkenanordnung 10 in Einstichrichtung E und die Nebenantriebseinrichtung 40 zum Bewegen der Nadelbalkenanordnung in Förderrichtung F, ist ersichtlich, dass in der Regel ein Hub in Einstichrichtung E zeitgleich mit einem Hub in Förderrichtung F erfolgen soll. Wird die Hubbewegung in Einstichrichtung E nun beispielsweise durch Bewegen der mindestens einen Hauptwelle 24 um einen Drehwinkel bewirkt, der zwischen dem OT und dem UT (wie in Fig. 5a) angeordnet ist, und der Hub in Förderrichtung F durch Bewegen der Nebenwelle 44 um einen Drehwinkel bewirkt, der symmetrisch zum OT bzw. UT angeordnet ist (vgl. Fig. 5b), ergibt sich, dass die Nebenwelle 44 bzw. der Nebenantrieb 42 mit halber Frequenz im Vergleich zur Frequenz der Antriebseinrichtung 20 angetrieben werden können. Folglich ergibt sich für den Nebenantrieb 42 sowie für die diesem zugeordneten Komponenten eine geringere Drehzahl und somit geringere Beschleunigungen auf die jeweiligen Komponenten (Nebenantrieb 42, Nebenwelle 44, Nebenpleuel 46). Geringere Beschleunigungen wirken sich schonend auf die betreffenden Komponenten aus. Außerdem werden durch reduzierte Beschleunigungen auch die Kräfte in Förderrichtung F der Nadelmaschine reduziert, die wiederum ungewollte Schwingungen hervorrufen können.

Insgesamt wird im Rahmen eines erfindungsgemäßen Verfahrens eine Nadelmaschine bereitgestellt, die bei einfacher konstruktiver Umsetzung eine Vielzahl von Möglichkeiten zur Beeinflussung der Hubbewegungen der Nadelbalkenanordnung in Einstichrichtung und in Förderrichtung ermöglicht.

## Patentansprüche

1. Verfahren zum Vernadeln einer Vliesbahn mit einer Nadelmaschine (1), die umfasst:
eine Nadelbalkenanordnung (10), die mindestens einen Nadelbalken (12) umfasst, und eine Antriebseinrichtung (20) zum Hin- und Herbewegen der Nadelbalkenanordnung (10) in einer Einstichrichtung (E);
wobei die Antriebseinrichtung (20) einen ersten Antrieb (22) und eine erste Hauptwelle (24) umfasst, wobei an der ersten Hauptwelle (24) ein erster Hauptpleuel (26) exzentrisch gelagert ist, der die erste Hauptwelle (24) mit der Nadelbalkenanordnung (10) gelenkig verbindet;
**gekennzeichnet durch**
Ansteuern des ersten Antriebs (22) derart, dass er die erste Hauptwelle (24) zyklisch um einen vorbestimmten ersten Drehwinkel (α) hin- und herbewegt.

2. Verfahren nach Anspruch 1, **dadurch gekennzeichnet, dass** der erste Drehwinkel (α) zwischen 2° und 178°, bevorzugt zwischen 10° und 90° beträgt.

3. Verfahren nach einem der vorangehenden Ansprüche, **dadurch gekennzeichnet, dass** die Antriebseinrichtung (20) weiterhin einen zweiten Antrieb (28) und eine zweite Hauptwelle (30) umfasst, wobei an der zweiten Hauptwelle (30) ein zweiter Hauptpleuel (32) exzentrisch gelagert ist, der die zweite Hauptwelle (30) mit der Nadelbalkenanordnung (10) gelenkig verbindet, und
dass das Verfahren das Ansteuern des zweiten Antriebs (28) derart umfasst, dass er die zweite Hauptwelle (30) zyklisch um einen vorbestimmten zweiten Drehwinkel (β) hin- und herbewegt, wobei der zweite Drehwinkel (β) zwischen 2° und 178°, bevorzugt zwischen 10° und 90° beträgt.

4. Verfahren nach Anspruch 3, **gekennzeichnet durch** das Ansteuern des ersten Antriebs (22) und des zweiten Antriebs (28) derart, dass der erste Drehwinkel (α) gleich dem zweiten Drehwinkel (β) ist und die erste und die zweite Hauptwelle (24, 30) zu gleichen Zeiten um gleiche Winkelbeträge bewegt werden.

5. Verfahren nach Anspruch 4, **gekennzeichnet durch** das Ansteuern des ersten Antriebs (22) und des zweiten Antriebs (28) derart, dass sie die erste und die zweite Hauptwelle (24, 30) gegenläufig hin- und herbewegen.

6. Verfahren nach Anspruch 3, **gekennzeichnet durch** das Ansteuern des ersten Antriebs (22) und des zweiten Antriebs (28) derart, dass sie die erste und die zweite Hauptwelle (24, 30) phasenverstellt bewegt werden.

7. Verfahren nach Anspruch 3 oder 6, **gekennzeichnet durch** das Ansteuern des ersten Antriebs (22) und des zweiten Antriebs (28) derart, dass der erste Drehwinkel (α) ungleich dem zweiten Drehwinkel (β) ist.

8. Verfahren nach einem der vorangehenden Ansprüche, **dadurch gekennzeichnet, dass** der erste Antrieb (22) einen Elektromotor, vorzugsweise einen Torque-Motor oder einen Servomotor, umfasst.

9. Verfahren nach einem der Ansprüche 2 bis 8, **dadurch gekennzeichnet, dass** der zweite Antrieb (28) einen Elektromotor, vorzugsweise einen Torque-Motor oder einen Servomotor, umfasst.

10. Verfahren nach einem der vorangehenden Ansprüche, **dadurch gekennzeichnet, dass** die Nadelmaschine (1) weiterhin eine Nebenantriebseinrichtung (40) zum Bewegen der Nadelbalkenanordnung (10) in einer Förderrichtung (F) der Vliesbahn, die quer zur Einstichrichtung (E) verläuft, umfasst, wobei die Nebenantriebseinrichtung (40) einen Nebenantrieb (42) und eine Nebenwelle (44) umfasst, wobei an der Nebenwelle (44) ein Nebenpleuel (46) exzentrisch gelagert ist, der die Nebenwelle (44) mit der Nadelbalkenanordnung (10) gelenkig verbindet; und
dass das Verfahren das Ansteuern des Nebenantriebs (42) derart umfasst, dass er die Nebenwelle (44) zyklisch um einen vorbestimmten dritten Drehwinkel (γ) hin- und herbewegt.

11. Verfahren zum Vernadeln einer Vliesbahn mit einer Nadelmaschine (1), die umfasst:
eine Nadelbalkenanordnung (10), die mindestens einen Nadelbalken (12) umfasst, eine Antriebseinrichtung (20) zum Hin- und Herbewegen der Nadelbalkenanordnung (10) in einer Einstichrichtung (E) und eine Nebenantriebseinrichtung (40) zum Bewegen der Nadelbalkenanordnung (10) in einer Förderrichtung (F) der Vliesbahn, die quer zur Einstichrichtung (E) verläuft;
wobei die Antriebseinrichtung (20) einen ersten Antrieb (22) und eine erste Hauptwelle (24) umfasst, wobei an der ersten Hauptwelle (24) ein erster Hauptpleuel (26) exzentrisch gelagert ist, der die Hauptwelle (24) mit der Nadelbalkenanordnung (10) gelenkig verbindet;
wobei die Nebenantriebseinrichtung (40) einen Nebenantrieb (42) und eine Nebenwelle (44) umfasst, wobei an der Nebenwelle (44) ein Nebenpleuel (46) exzentrisch gelagert ist, der die Nebenwelle (44) mit der Nadelbalkenanordnung (10) gelenkig verbindet;
**gekennzeichnet durch**
Ansteuern des Nebenantriebs (42) derart, dass er die Nebenwelle (44) zyklisch um einen vorbestimmten Drehwinkel hin- und herbewegt.

12. Verfahren nach Anspruch 11, **dadurch gekennzeichnet, dass** der Drehwinkel stufenlos einstellbar ist.

13. Verfahren nach Anspruch 11 oder 12, **dadurch gekennzeichnet, dass** der Drehwinkel zwischen 2° und 178°, bevorzugt zwischen 10° und 150° beträgt.

14. Verfahren nach einem der Ansprüche 11 bis 13, **gekennzeichnet durch** das Ansteuern des ersten Antriebs (22) derart, dass er die erste Hauptwelle (24) umlaufend bewegt.

15. Verfahren nach einem der Ansprüche 11 bis 13, **dadurch gekennzeichnet, dass** der Nebenantrieb (42) einen Elektromotor, vorzugsweise einen Torque-Motor oder einen Servomotor, umfasst.

## Claims

1. Method for needling a non-woven web using a needling machine (1) which comprises:
a needle bar assembly (10) which comprises at least one needle bar (12) and a drive installation (20) for moving the needle bar assembly (10) in a reciprocating manner in an insertion direction (E) ;
wherein the drive installation (20) comprises a first drive (22) and a first main shaft (24), wherein a first main crank (26) which connects the first main shaft (24) in an articulated manner to the needle bar assembly (10) is eccentrically mounted on the first main shaft (24);
**characterized by**
actuating the first drive (22) in such a manner that said first drive (22) moves the first main shaft (24) in a cyclical reciprocating manner about a predetermined first rotation angle (α).

2. Method according to Claim 1, **characterized in that** the first rotation angle (α) is between 2° and 178°, preferably between 10° and 90°.

3. Method according to one of the preceding claims, **characterized in that** the drive installation (20) furthermore comprises a second drive (28) and a second main shaft (30), wherein a second main crank (32) which connects the second main shaft (30) in an articulated manner to the needle bar assembly (10) is eccentrically mounted on the second main shaft (30), and
**in that** the method comprises the actuating of the second drive (28) in such a manner that said second drive (28) moves the second main shaft (30) in a cyclical reciprocating manner about a predetermined second rotation angle (β), wherein the second rotation angle (β) is between 2° and 178°, preferably between 10° and 90°.

4. Method according to Claim 3, **characterized by** the actuating of the first drive (22) and of the second drive (28) in such a manner that the first rotation angle (α) is equal to the second rotation angle (β), and the first and the second main shaft (24, 30) are contemporaneously moved by equal angular values.

5. Method according to Claim 4, **characterized by** the actuating of the first drive (22) and of the second drive (28) in such a manner that said first drive (22) and said second drive (28) move the first and the second main shaft (24, 30) in a reciprocating manner in opposite directions.

6. Method according to Claim 3, **characterized by** the actuating of the first drive (22) and of the second drive (28) in such a manner that said first drive (22) and said second drive (28) are moved the first and the second main shaft (24, 30) out of phase.

7. Method according to Claim 3 or 6, **characterized by** the actuating of the first drive (22) and of the second drive (28) in such a manner that the first rotation angle (α) is not equal to the second rotation angle (β).

8. Method according to one of the preceding claims, **characterized in that** the first drive (22) comprises an electric motor, preferably a torque motor or a servomotor.

9. Method according to one of Claims 2 to 8, **characterized in that** the second drive (28) comprises an electric motor, preferably a torque motor or a servomotor.

10. Method according to one of the preceding claims, **characterized in that** the needling machine (1) furthermore comprises an auxiliary drive installation (40) for moving the needle bar assembly (10) in a conveying direction (F) of the non-woven web that runs transversely to the insertion direction (E), wherein the auxiliary drive installation (40) comprises an auxiliary drive (42) and an auxiliary shaft (44), wherein an auxiliary crank (46) which connects the auxiliary shaft (44) in an articulated manner to the needle bar assembly (10) is eccentrically mounted on the auxiliary shaft (44); and
**in that** the method comprises the actuating of the auxiliary drive (42) in such a manner that said auxiliary drive (42) moves the auxiliary shaft (44) in a cyclical reciprocating manner about a predetermined third rotation angle (γ).

11. Method for needling a non-woven web using a needling machine (1) which comprises:
a needle bar assembly (10) which comprises at least one needle bar (12), a drive installation (20) for moving the needle bar assembly (10) in a reciprocating manner in an insertion direction (E), and an auxiliary drive installation (40) for moving the needle bar assembly (10) in a conveying direction (F) of the non-woven web that runs transversely to the insertion direction (E);
wherein the drive installation (20) comprises a first drive (22) and a first main shaft (24), wherein a first main crank (26) which connects the main shaft (24) in an articulated manner to the needle bar assembly (10) is eccentrically mounted on the first main shaft (24);
wherein the auxiliary drive installation (40) comprises an auxiliary drive (42) and an auxiliary shaft (44), wherein an auxiliary crank (46) which connects the auxiliary shaft (44) in an articulated manner to the needle bar assembly (10) is eccentrically mounted on the auxiliary shaft (44) ;
**characterized by**
actuating the auxiliary drive (42) in such a manner that said auxiliary drive (42) moves the auxiliary shaft (44) in a cyclical reciprocating manner about a predetermined rotation angle.

12. Method according to Claim 11, **characterized in that** the rotation angle is capable of being set in a stepless manner.

13. Method according to Claim 11 or 12, **characterized in that** the rotation angle is between 2° and 178°, preferably between 10° and 150°.

14. Method according to one of Claims 11 to 13, **characterized by** the actuating of the first drive (22) in such a manner that said first drive (22) moves the first main shaft (24) in a revolving manner.

15. Method according to one of Claims 11 to 13, **characterized in that** the auxiliary drive (42) comprises an electric motor, preferably a torque motor or a servomotor.

## Revendications

1. Procédé pour l'aiguilletage d'une nappe de non-tissé avec une aiguilleteuse (1), qui comprend :
un agencement de barres à aiguilles (10), qui comprend au moins une barre à aiguilles (12), et un dispositif d'entraînement (20) pour le déplacement en va-et-vient de l'agencement de barres à aiguilles (10) dans une direction de piquage (E) ;
le dispositif d'entraînement (20) comprenant un premier entraînement (22) et un premier arbre principal (24), tandis qu'est montée de manière excentrique sur le premier arbre principal (24) une première bielle principale (26), qui relie de manière articulée le premier arbre principal (24) à l'agencement de barres à aiguilles (10) ;
**caractérisé par**
une action de commande du premier entraînement (22) de façon telle qu'il déplace en va-et-vient le premier arbre principal (24), de manière cyclique, d'un premier angle de rotation (α) préfixé.

2. Procédé suivant la revendication 1, **caractérisé en ce que** le premier angle de rotation (α) vaut entre 2° et 178°, de préférence entre 10° et 90°.

3. Procédé suivant l'une des revendications précédentes, **caractérisé en ce que** le dispositif d'entraînement (20) comprend en outre un second entraînement (28) et un second arbre principal (30), tandis qu'est montée de manière excentrique sur le second arbre principal (30) une seconde bielle principale (32), qui relie de manière articulée le second arbre principal (30) à l'agencement de barres à aiguilles (10), et
**en ce que** le procédé comprend l'action de commande du second entraînement (28) de façon telle qu'il déplace en va-et-vient le second arbre principal (30), de manière cyclique, d'un second angle de rotation (β) préfixé, le second angle de rotation (β) valant entre 2° et 178°, de préférence entre 10° et 90°.

4. Procédé suivant la revendication 3, **caractérisé par** l'action de commande du premier entraînement (22) et du second entraînement (28) de façon telle que le premier angle de rotation (α) est égal au second angle de rotation (β) et le premier et le second arbres principaux (24, 30) sont déplacés aux mêmes instants de valeurs d'angle égales.

5. Procédé suivant la revendication 4, **caractérisé par** l'action de commande du premier entraînement (22) et du second entraînement (28) de façon telle qu'ils déplacent en va-et-vient le premier et le second arbres principaux (24, 30) dans des sens opposés.

6. Procédé suivant la revendication 3, **caractérisé par** l'action de commande du premier entraînement (22) et du second entraînement (28) de façon telle qu'ils déplacent le premier et le seconds arbres principaux (24, 30) avec un décalage de phase.

7. Procédé suivant la revendication 3 ou 6, **caractérisé par** l'action de commande du premier entraînement (22) et du second entraînement (28) de façon telle que le premier angle de rotation (α) n'est pas égal au second angle de rotation (β).

8. Procédé suivant l'une des revendications précédentes, **caractérisé en ce que** le premier entraînement (22) comprend un moteur électrique, de préférence un moteur couple ou un servomoteur.

9. Procédé suivant l'une des revendications 2 à 8, **caractérisé en ce que** le second entraînement (28) comprend un moteur électrique, de préférence un moteur couple ou un servomoteur.

10. Procédé suivant l'une des revendications précédentes, **caractérisé en ce que** l'aiguilleteuse (1) comprend en outre un dispositif d'entraînement secondaire (40) pour le déplacement de l'agencement de barres à aiguilles (10) dans une direction d'avancement (F) de la nappe de non-tissé qui s'étend transversalement à la direction de piquage (E), le dispositif d'entraînement secondaire (40) comprenant un entraînement secondaire (42) et un arbre secondaire (44), tandis qu'est montée de manière excentrique sur l'arbre secondaire (44) une bielle secondaire (46), qui relie de manière articulée l'arbre secondaire (44) à l'agencement de barres à aiguilles (10) ; et
**en ce que** le procédé comprend l'action de commande de l'entraînement secondaire (42) de façon telle qu'il déplace en va-et-vient l'arbre secondaire (44), de manière cyclique, d'un troisième angle de rotation (γ) préfixé.

11. Procédé pour l'aiguilletage d'une nappe de non-tissé avec une aiguilleteuse (1), qui comprend :
un agencement de barres à aiguilles (10), qui comprend au moins une barre à aiguilles (12), un dispositif d'entraînement (20) pour le déplacement en va-et-vient de l'agencement de barres à aiguilles (10) dans une direction de piquage (E) et un dispositif d'entraînement secondaire (40) pour le déplacement de l'agencement de barres à aiguilles (10) dans une direction d'avancement (F) de la nappe de non-tissé qui s'étend transversalement à la direction de piquage (E) ;
le dispositif d'entraînement (20) comprenant un premier entraînement (22) et un premier arbre principal (24), tandis qu'est montée de manière excentrique sur le premier arbre principal (24) une première bielle principale (26), qui relie de manière articulée l'arbre principal (24) à l'agencement de barres à aiguilles (10) ;
le dispositif d'entraînement secondaire (40) comprenant un entraînement secondaire (42) et un arbre secondaire (44), tandis qu'est montée de manière excentrique sur l'arbre secondaire (44) une bielle secondaire (46), qui relie de manière articulée l'arbre secondaire (44) à l'agencement de barres à aiguilles (10) ;
**caractérisé par** une action de commande de l'entraînement secondaire (42) de façon telle qu'il déplace en va-et-vient l'arbre secondaire (44), de manière cyclique, d'un angle de rotation préfixé.

12. Procédé suivant la revendication 11, **caractérisé en ce que** l'angle de rotation est réglable de manière continue.

13. Procédé suivant la revendication 11 ou 12, **caractérisé en ce que** l'angle de rotation vaut entre 2° et 178°, de préférence entre 10° et 150°.

14. Procédé suivant l'une des revendications 11 à 13, **caractérisé par** l'action de commande du premier entraînement (22) de façon telle qu'il déplace le premier arbre principal (24) de façon variable.

15. Procédé suivant l'une des revendications 11 à 13, **caractérisé en ce que** l'entraînement secondaire (42) comprend un moteur électrique, de préférence un moteur couple ou un servomoteur.
